# EUROPEAN PATENT APPLICATION

(11) **EP 4 772 420 A1**
(43) Date of publication of application: **08.07.2026**
(21) Application number: 24874341.1
(22) Date of filing: 05.08.2024
(51) Int. Cl.: B62D 21/15, B62D 21/00, B62D 25/20

(54) **COLLISION ENERGY ABSORPTION DEVICE FOR VEHICLE AND METHOD FOR MANUFACTURING COLLISION ENERGY ABSORPTION DEVICE FOR VEHICLE**

(30) Priority: 04.10.2023 JP 2023172598
(71) Applicant: G-Tekt Corporation, Saitama-city, Saitama 330-0854 (JP)
(72) Inventor: NOSHIRO, Makoto, Shioya-gun, Tochigi 329-1233 (JP); TOKUNAGA, Shoma, Shioya-gun, Tochigi 329-1233 (JP)
(74) Representative: Berghofer, Benedikt
(86) International application number: PCT/JP2024/027834
(87) International publication number: WO 2025/074727

(57) **Abstract**

A collision energy absorption device (10) for a vehicle includes an energy absorption member (20) and a shell (30). The shell (30) includes a lower shell (31) and an upper shell (40). The upper shell (40) includes a foot portion (41), a neck portion (42), and a head portion (43), the neck portion (42) having a double-sheet structure, and at least the lower shell (31) and the head portion (43) being located on a non-input side. In an event of a collision, the head portion (43) and the neck portion (42) having a double-sheet structure serve to suppress vertical collapsing of the energy absorption member (20) when subjected to a load on an input side.

## Description

### TECHNICAL FIELD

The present invention relates to a collision energy absorption device for a vehicle.

### BACKGROUND ART

### [Description of Terms]

"Roll forming" is a plastic working method in which a roll forming machine in which several sets of rolls are arranged is prepared, a metal sheet is inserted into a first roll, and the metal sheet is gradually bent to obtain a desired cross section at a last roll.

"Press forming" is a plastic working method in which a press machine to which a punch and a die are mounted is prepared, a metal sheet is placed on the die, and the punch is relatively moved into the die to obtain a drawn article.

A roll forming machine is large and expensive, while a press machine is smaller and less expensive than the roll forming machine.

"Input side" is a side to which an external force due to a collision is first applied. "Non-input side" is a side that is finally affected by the external force due to the collision.

### [Conventional Art]

In recent years, electric vehicles have become widespread. In many electric vehicles, a battery case is disposed under a floor. There is a demand for extending the driving range, which leads to the adoption of a large battery case. The large battery case is extended to a side sill.

To protect a drive battery housed in the battery case, a collision energy absorption device is provided around the side sill.

Conventionally, collision energy absorption devices for a vehicle having various structures have been proposed (for example, see Patent Document 1 (FIG. 2)).

Patent Document 1 will be described with reference to the following drawing.

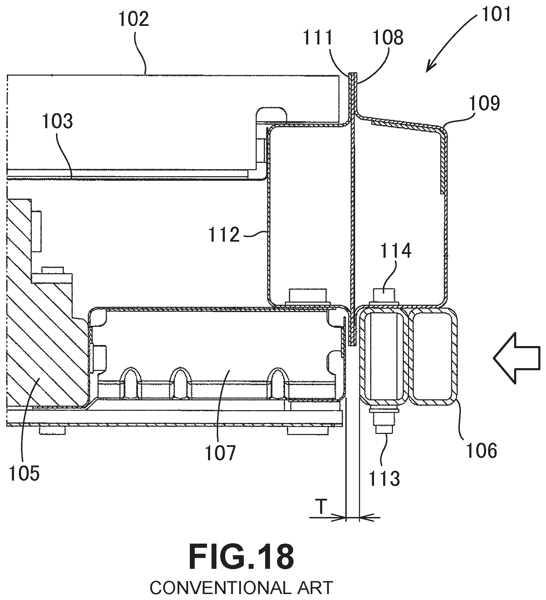

FIG. 18 is a view for explaining a basic configuration of a conventional collision energy absorption device for a vehicle.

As illustrated in FIG. 18, a cross frame 102 is connected to a side sill 101, which is a part of a vehicle body, a floor panel 103 is laid under the cross frame 102, and a battery case 105 is disposed under the floor panel 103.

In addition, a first collision energy absorption device 106 is mounted to the lower surface of the side sill 101, and a second collision energy absorption device 107 is mounted between the side sill 101 and the battery case 105. Since the first collision energy absorption device 106 and the second collision energy absorption device 107 are separate from the battery case 105, the thickness can be arbitrarily set, and the shape can be determined.

A side sill outer panel 109 includes flange portions 108 on upper and lower sides thereof. A side sill inner panel 112 includes flange portions 111 on upper and lower sides thereof. The flange portions 108 and the flange portions 111 are joined to each other.

Due to the presence of the flange portions 108 and the flange portions 111, it is inevitable to provide a gap T between the first collision energy absorption device 106 and the second collision energy absorption device 107.

When subjected to a collision force indicated by the white arrow, first, the first collision energy absorption device 106 is crushed to absorb collision energy.

When the collision force exceeds a certain value, the first collision energy absorption device 106 approaches and comes into contact with the second collision energy absorption device 107 while being crushed. After this contact, the second collision energy absorption device 107 is crushed to further absorb the collision energy.

In this way, the battery case 105 is protected.

However, the structure disclosed in Patent Document 1 has the following drawbacks.

First, due to the presence of the gap T, the transmission of the collision force from the first collision energy absorption device 106 to the second collision energy absorption device 107 lacks smoothness. That is, when the gap T is small, the transmission takes place in a short time; however, when the gap T is large, the transmission is delayed.

As a result, a problem arises in that the collision absorption mode becomes unstable.

Next, the first collision energy absorption device 106 is fixed to the side sill outer panel 109 using a bolt 113.

When subjected to a collision force indicated by the white arrow, the first collision energy absorption device 106 rotates about a head 114 of the bolt 113. In FIG. 18, the first collision energy absorption device 106 rotates clockwise.

Upon rotation, a lower end of the first collision energy absorption device 106 comes into contact with the second collision energy absorption device 107, and other portions of the first collision energy absorption device 106 come into contact with the second collision energy absorption device 107 with a delay.

In this way, the first collision energy absorption device 106 and the second collision energy absorption device 107 are separated from each other, and therefore, the collision absorption mode becomes further unstable.

Stabilization of the collision absorption mode is important, and a collision energy absorption device for a vehicle capable of further stabilizing the collision absorption mode is required.

### CITATION LIST

### PATENT DOCUMENT

Patent Document 1: Japanese Patent No. 7325475

### DISCLOSURE OF THE INVENTION

### PROBLEM TO BE SOLVED BY THE INVENTION

An object of the invention is to provide a collision energy absorption device for a vehicle having a large amount of collision energy absorbed and capable of further stabilizing a collision absorption mode.

### MEANS FOR SOLVING PROBLEM

According to a first aspect of the invention, there is provided a collision energy absorption device for a vehicle that absorbs collision energy when a collision force is applied in one direction, the collision energy absorption device for a vehicle including: an energy absorption member that is an elongated member extending in a direction orthogonal to the one direction and that absorbs the collision energy in the one direction; and a shell enclosing the energy absorption member. The shell includes a lower shell covering a lower portion of the energy absorption member and an upper shell covering an upper portion of the energy absorption member. The upper shell includes, in a cross-sectional view, a foot portion extending to the lower shell and enclosing the energy absorption member, a neck portion located at a base of the foot portion, and a head portion located above the neck portion, the neck portion having a double-sheet structure, and at least the lower shell and the head portion being located on a non-input side. In an event of a collision, the head portion and the neck portion having a double-sheet structure serve to suppress vertical collapsing of the energy absorption member when subjected to a load on an input side.

According to a second aspect of the invention, preferably, in the collision energy absorption device for a vehicle according to the first aspect, the head portion and the foot portion are fixed to a mounting surface formed on a part of a vehicle body or an attachment of the vehicle body, and in a cross-sectional view, a portion surrounded by the head portion, the neck portion, the foot portion, and the mounting surface is a closed cross-section portion.

According to a third aspect of the invention, preferably, in the collision energy absorption device for a vehicle according to the first aspect or the second aspect, the energy absorption member is an elongated member extending along a longitudinal axis of a vehicle, and is a corrugated sheet in which peaks and valleys are alternately arranged along the longitudinal axis or a porous structure having a plurality of polygonal holes extending in a vehicle width direction.

According to a fourth aspect of the invention, preferably, in the collision energy absorption device for a vehicle according to the first aspect or the second aspect, the energy absorption member includes a first energy absorption member and a second energy absorption member disposed to be adjacent to the first energy absorption member. The first energy absorption member buckles in the one direction to absorb the collision energy. The second energy absorption member extends in the direction orthogonal to the one direction, and absorbs the collision energy through bending deformation.

According to a fifth aspect of the invention, preferably, in the collision energy absorption device for a vehicle according to the first aspect, the head portion has, in a cross-sectional view, the same width as the lower shell.

According to a sixth aspect of the invention, preferably, in the collision energy absorption device for a vehicle according to the fourth aspect, the first energy absorption member is housed in the shell, and the second energy absorption member is disposed outside the shell and beside the head portion.

According to a seventh aspect of the invention, preferably, in the collision energy absorption device for a vehicle according to the fourth aspect, a protrusion or a recess serving as a starting point for deformation is formed on the input side of the shell.

According to an eighth aspect of the invention, preferably, in the collision energy absorption device for a vehicle according to the seventh aspect, the protrusion or the recess is formed at a portion closing a groove of the second energy absorption member.

According to a ninth aspect of the invention, preferably, in the collision energy absorption device for a vehicle according to the first aspect, the lower shell includes a projecting portion extending toward the non-input side. The upper shell includes a folded flange portion overlapping the projecting portion, the folded flange portion being joined to the lower shell or being joined to the lower shell via an inner plate that is a separate member and that includes a folded flange portion overlapping the projecting portion.

According to a tenth aspect of the invention, preferably, in the collision energy absorption device for a vehicle according to the second aspect, the attachment is a battery case, and the vehicle body includes the battery case that houses a battery. The battery case includes a bottom plate supporting the battery and a frame surrounding the battery placed on the bottom plate, the frame including left and right side frames and cross members extending between the side frames at front ends and rear ends of the side frames. Each of the side frames is the collision energy absorption device for a vehicle according to the second aspect.

According to an eleventh aspect of the invention, preferably, in the collision energy absorption device for a vehicle according to the second aspect, the mounting surface is an outer surface of a battery case that houses a battery.

According to a twelfth aspect of the invention, preferably, in the collision energy absorption device for a vehicle according to the second aspect, the lower shell includes a lower extension portion extending downward along the mounting surface, and the upper shell includes an upper extension portion extending upward along the mounting surface.

According to a thirteenth aspect of the invention, preferably, in the collision energy absorption device for a vehicle according to the first aspect, the energy absorption member, the lower shell, and the upper shell are made of aluminum alloy sheets.

According to a fourteenth aspect of the invention, preferably, in the collision energy absorption device for a vehicle according to the first aspect, the energy absorption member includes a first energy absorption member and a second energy absorption member, and a thickness of the first energy absorption member is greater than thicknesses of the lower shell and the upper shell.

According to a fifteenth aspect of the invention, preferably, in the collision energy absorption device for a vehicle according to the fourteenth aspect, a thickness of the second energy absorption member is less than the thickness of the first energy absorption member.

According to a sixteenth aspect of the invention, preferably, in the collision energy absorption device for a vehicle according to the fourth aspect, the first energy absorption member is divided into a plurality of members for one second energy absorption member, and a stay is attached between the adjacent first energy absorption members, the stay extending upward from the lower shell while penetrating through the upper shell and being fixed directly or indirectly to the vehicle body.

According to a seventeenth aspect of the invention, there is provided a method for manufacturing a collision energy absorption device for a vehicle, the method including: a step of manufacturing an energy absorption member; a lower shell manufacturing step of manufacturing, by press forming, a lower shell having a dish shape and configured to house the energy absorption member; an upper shell manufacturing step of manufacturing an upper shell by roll forming, the upper portion covering the lower shell in which the energy absorption member is housed and having a shape including, in a cross-sectional view, a foot portion extending to the lower shell, a neck portion located at a base of the foot portion, and a head portion located above the neck portion; a neck portion joining step of joining, by a laser beam or an adhesive, double sheets constituting the neck portion; and a step of obtaining a collision energy absorption device for a vehicle by joining the upper shell to the lower shell by a laser beam or an adhesive.

### EFFECT OF THE INVENTION

In the invention according to the first aspect, the shell that houses the energy absorption member is composed of the lower shell and the upper shell, and the upper shell includes the neck portion and the head portion.

In the event of a collision, the head portion and the neck portion serve to suppress vertical collapsing of the energy absorption member. Since the energy absorption member is crushed from the input side to the non-input side while the collapsing is suppressed, the amount of collision energy absorbed is increased, and the collision absorption mode is stabilized.

That is, the invention provides the collision energy absorption device for a vehicle having a large amount of collision energy absorbed and capable of further stabilizing the collision absorption mode.

In the invention according to the second aspect, the portion surrounded by the head portion, the neck portion, the foot portion, and the mounting surface forms a closed cross-section portion. The closed cross-section portion has higher rigidity compared to an open cross section. Due to the closed cross-section portion having such high rigidity, the position of the neck portion is maintained in the initial stage of a collision.

In the invention according to the third aspect, the energy absorption member is a corrugated sheet in which peaks and valleys are alternately arranged or a porous structure having a plurality of polygonal holes.

The corrugated sheet or the polygonal holes form ridges extending in the vehicle width direction. Since the ridges buckle when subjected to a lateral load, a sufficiently large amount of collision energy can be absorbed.

In the invention according to the fourth aspect, the first energy absorption member and the second energy absorption member are housed in the shell so as to be orthogonal to and adjacent to each other.

The corrugated sheet or porous structure of the first energy absorption member buckles when subjected to a load in a ridge direction to absorb energy.

The second energy absorption member is a longitudinal member having a groove or a cavity, and undergoes bending deformation when subjected to a load in a longitudinal direction to absorb energy.

A variety of collision absorption modes including pole collisions can be set by configuring the energy absorption member as a combination of the first energy absorption member and the second energy absorption member.

For example, when the second energy absorption member is placed on the input side, a point load, that is, a local load is applied to the second energy absorption member due to a pole collision. The second energy absorption member is bent by the local load. The second energy absorption member converts the local load into a distributed load while undergoing bending deformation. The distributed load is applied to the first energy absorption member. The distributed load is applied along the ridges of the second energy absorption member.

Since all the ridges of the first energy absorption member are crushed from the input side to the non-input side, the energy absorption performance is enhanced.

In addition, when the first energy absorption member is placed on the input side, the first energy absorption member can be reliably supported by the second energy absorption member. This support allows the first energy absorption member to reliably buckle along the ridges.

In the invention according to the fifth aspect, the width of the head portion is increased to the same width as the lower shell.

The rigidity of the head portion can be enhanced by increasing the width of the head portion. Since the rigidity of the head portion is enhanced, the collapsing of the collision energy absorption device for a vehicle can be further suppressed.

In addition, since the rigidity of the head portion is enhanced, the amount of collision energy absorbed by the head portion is increased, and the collision energy absorption performance of the collision energy absorption device for a vehicle is enhanced.

In the invention according to the sixth aspect, the first energy absorption member is housed in the shell, whereas the second energy absorption member is disposed outside the shell and beside the head portion.

Since the second energy absorption member is disposed beside the head portion, the head portion becomes inevitably smaller.

A smaller head portion leads to a smaller roll-forming machine, so that machine costs can be reduced.

In addition, a wider variety of collision modes can be addressed by providing a difference in energy absorption performance between the first energy absorption member and the second energy absorption member. In addition, the first energy absorption member and the second energy absorption member simultaneously begin to crush in parallel.

In the invention according to the seventh aspect, the shell is provided with the protrusion or the recess serving as a starting point for deformation.

In the event of a collision, the protrusion or the recess preferentially begins to undergo plastic deformation. Crushing deformation is induced to occur from the input side by providing an appropriate number of the protrusions or the recesses at appropriate locations, thereby allowing the collision mode to be controlled.

In the invention according to the eighth aspect, the protrusion or the recess is formed at a portion closing the groove of the second energy absorption member.

Since the groove of the second energy absorption member and a folded portion of the protrusion or the recess serve as triggers to initiate the absorption of collision energy, the control of the collision mode can be further stabilized.

In the invention according to the ninth aspect, the upper shell or the lower shell includes the projecting portion or the folded flange, and the projecting portion and the folded flange are overlapped to form the shell.

A reduction in costs can be achieved by inexpensive manufacturing methods; for example, the upper shell can be manufactured by roll forming and the lower shell can be manufactured by press forming. In addition, the upper shell, which is an elongated member having a complex cross section and including a head portion, can be easily manufactured by roll forming, and the lower shell that is elongated can be easily manufactured by press forming.

In the invention according to the tenth aspect, the function of the collision energy absorption device for a vehicle according to the invention is added to the side frame of the battery case, which is an attachment of a vehicle body of an electric vehicle.

Compared to manufacturing the side frame and the collision energy absorption device for a vehicle separately, the manufacturing cost of the collision energy absorption device for a vehicle can be reduced by also using the side frame as the collision energy absorption device for a vehicle.

In the invention according to the eleventh aspect, the mounting surface is a side wall of the battery case. That is, a closed cross section surrounded by the side wall, head portion, the neck portion, and the upper shell is added.

Since the side frame is reinforced by the collision energy absorption device for a vehicle, the side frame can be made thinner and smaller, so that weight reduction of the battery case can be achieved.

In the invention according to the twelfth aspect, the lower shell is provided with the lower extension portion extending downward, and the upper shell is provided with the upper extension portion extending upward.

The lower extension portion and the upper extension portion can be joined directly to the mounting surface without using a bracket. A mounting member such as a bracket can be eliminated.

In addition, since the lower extension portion and the upper extension portion are vertically spaced apart from each other, the collision energy absorption device for a vehicle is stably supported on the mounting surface. Since the collision energy absorption device for a vehicle is stably supported, vertical tilting of the collision energy absorption device for a vehicle in the event of a collision is effectively suppressed.

In the invention according to the thirteenth aspect, the energy absorption member, the lower shell, and the upper shell are made of an aluminum alloy.

Since the aluminum alloy sheet is lightweight, weight reduction of the energy absorption member can be achieved.

In addition, since an improvement in strength can be achieved by applying an appropriate heat treatment, an energy absorption member having excellent collision energy absorption performance is provided.

In the invention according to the fourteenth aspect, the energy absorption member is composed of the first energy absorption member and the second energy absorption member, and the thickness of the first energy absorption member is set to be greater than the thicknesses of the lower shell and the upper shell.

The energy absorption performance of the first energy absorption member is enhanced by increasing the thickness. In addition, weight reduction of the collision energy absorption device for a vehicle can be achieved by thinning the lower shell and the upper shell. By using steel sheets for the lower shell and the upper shell to provide ductility, and using an aluminum alloy for the energy absorption member to provide rigidity, variations in collision modes can also be increased.

In the invention according to the fifteenth aspect, the thickness of the second energy absorption member is set to be less than the thickness of the first energy absorption member.

When the second energy absorption member is disposed on the input side, the second energy absorption member is crushed, and then the first energy absorption member is crushed; however, since the second energy absorption member is thin, the second energy absorption member has low strength and is quickly crushed, and therefore, the energy absorption member is sequentially crushed from the input side, thereby promoting stabilization of the collision mode.

In the invention according to the sixteenth aspect, the first energy absorption member is divided into a plurality of members in the longitudinal direction (vehicle length direction) for one second energy absorption member.

By dividing the first energy absorption member, the stay can be disposed between the adjacent first energy absorption members. The lower shell can be connected to the vehicle body or an attachment of the vehicle body by the stay.

The collision energy absorption device for a vehicle extending over a long distance along the longitudinal axis of the vehicle is mounted to the vehicle body by a plurality of the stays. The collision energy absorption device for a vehicle is stabilized by the plurality of stays.

The method for manufacturing a collision energy absorption device for a vehicle according to the seventeenth aspect includes the step of manufacturing an energy absorption member, the lower shell manufacturing step using press forming, the upper shell manufacturing step using roll forming, the neck portion joining step using a laser beam or an adhesive, and the step of joining other portions of the neck portion using a laser beam or an adhesive.

The collision energy absorption device for a vehicle can be manufactured at low cost using general-purpose techniques such as press forming, roll forming, and laser welding (or bonding). Since integration can be achieved by sandwiching the energy absorption member between the lower shell and the upper shell, manufacturing is facilitated.

### BRIEF DESCRIPTION OF DRAWINGS

FIG. 1 is a cross-sectional view of a collision energy absorption device for a vehicle according to the invention;
FIG. 2 is a perspective view of an energy absorption member that is one of the main elements of the collision energy absorption device for a vehicle;
FIG. 3(a) and FIG. 3(b) are views for explaining the operation of the collision energy absorption device for a vehicle;
FIG. 4(a) to FIG. 4(c) are views for explaining the advantages of the collision energy absorption device for a vehicle according to the invention;
FIG. 5 is a perspective view illustrating a modification example of the energy absorption member;
FIG. 6 is a cross-sectional view of a collision energy absorption device for a vehicle including a first energy absorption member and a second energy absorption member;
FIG. 7 is a perspective view of the second energy absorption member;
FIG. 8(a) to FIG. 8(c) are views for explaining the operation of the first energy absorption member and the second energy absorption member;
FIG. 9 is another cross-sectional view of the collision energy absorption device for a vehicle including the first energy absorption member and the second energy absorption member;
FIG. 10(a) and FIG. 10(b) are views for explaining modification examples of the collision energy absorption device for a vehicle;
FIG. 11 is a view for explaining a modification example of the collision energy absorption device for a vehicle;
FIG. 12(a) to FIG. 12(c) are views for explaining a modification example of the collision energy absorption device for a vehicle;
FIG. 13 is an exploded perspective view of a battery case;
FIG. 14 is a cross-sectional view taken along line 14-14 in FIG. 13;
FIG. 15(a) is a view for explaining a modification example of the collision energy absorption device for a vehicle, and FIG. 15(b) is a view taken along arrow b-b in FIG. 15(a);
FIG. 16 is a view for explaining a modification example of the collision energy absorption device for a vehicle;
FIG. 17 is a block diagram for explaining a method for manufacturing a collision energy absorption device for a vehicle; and
FIG. 18 is a view for explaining a basic configuration of a conventional collision energy absorption device for a vehicle.

### BEST MODES FOR CARRYING OUT THE INVENTION

Embodiments of the invention will be described below with reference to the accompanying drawings.

### Embodiment

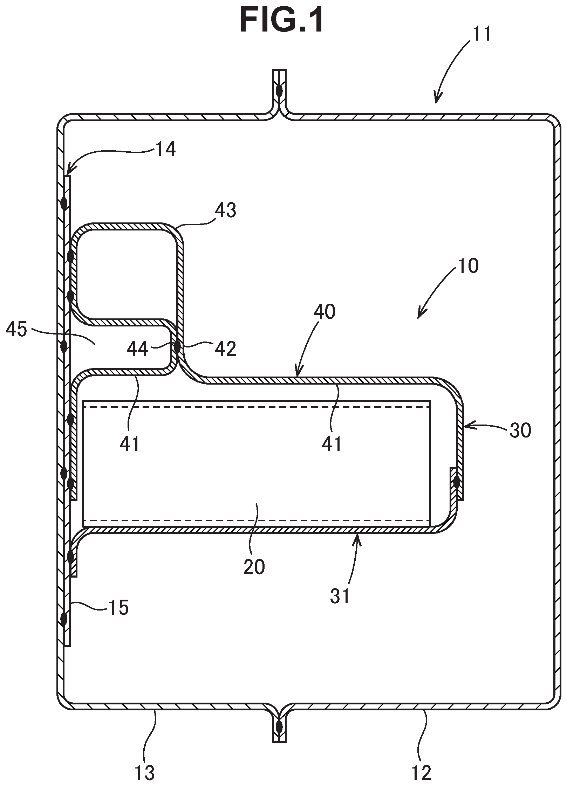

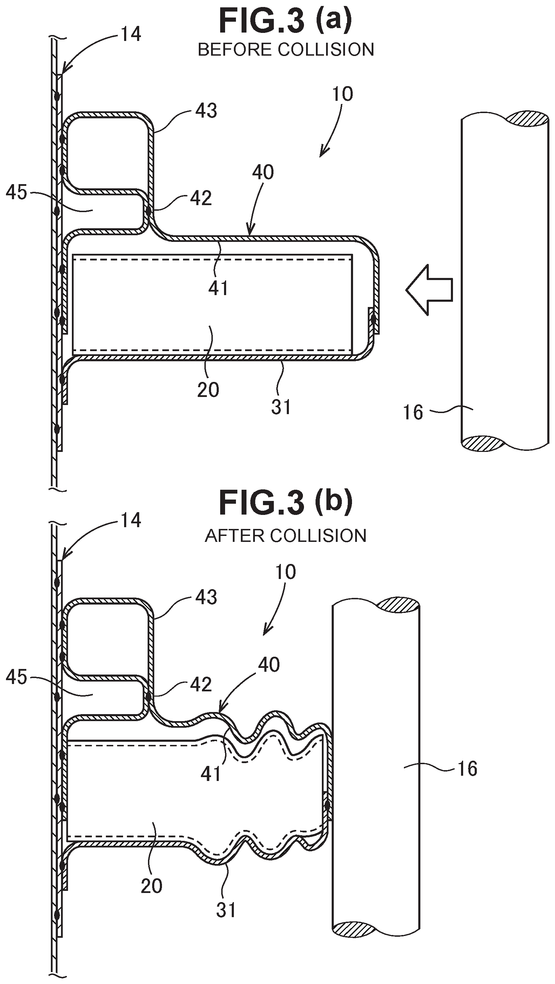

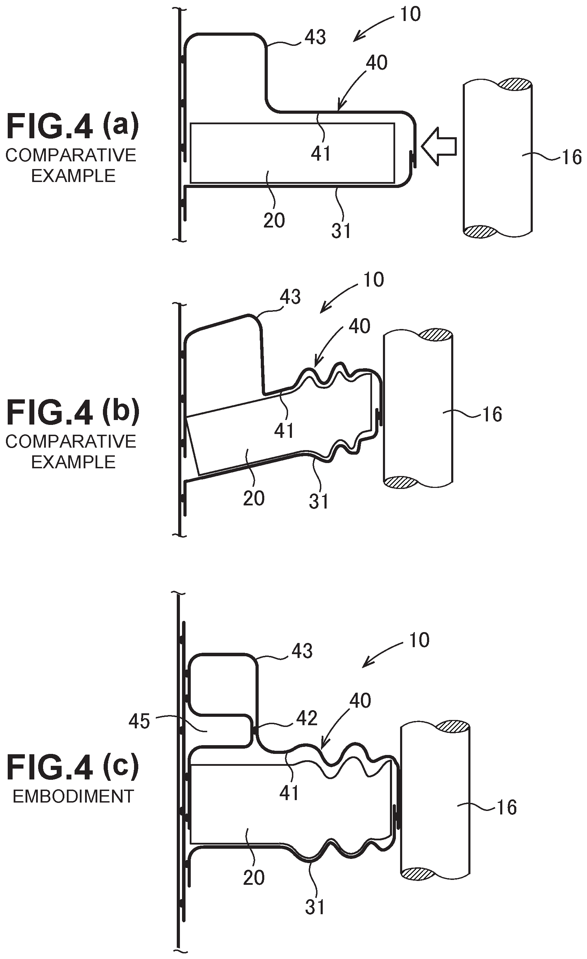

Hereinafter, a configuration of a collision energy absorption device 10 for a vehicle attached to a vehicle will be described with reference to FIG. 1, FIG. 2, and FIG. 5, and the operation of the collision energy absorption device 10 for a vehicle when a collision force is applied to the vehicle will be described with reference to FIG. 3(a), FIG. 3(b), and FIG. 4(a) to FIG. 4(c).

### [Collision Energy Absorption Device for Vehicle]

As illustrated in FIG. 1, the collision energy absorption device 10 for a vehicle is, for example, is housed in a side sill 11 and is attached to a vehicle body.

The collision energy absorption device 10 for a vehicle includes, as main elements, an energy absorption member 20 and a shell 30 enclosing the energy absorption member 20.

### [Shell]

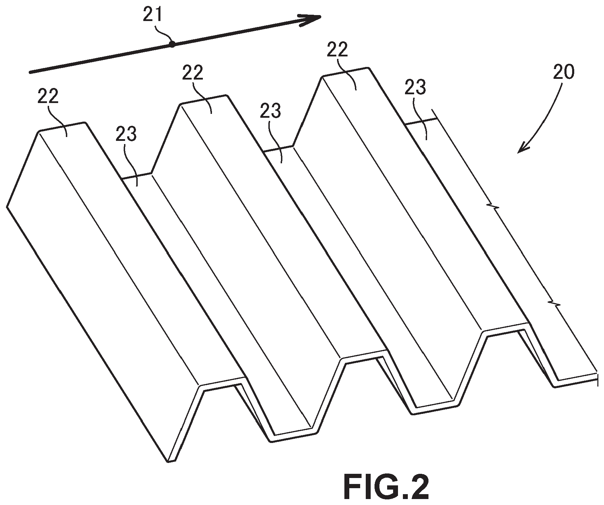

The shell 30 is a hollow body including, as main elements, a lower shell 31 covering a lower portion of the energy absorption member 20 and an upper shell 40 covering an upper portion of the energy absorption member 20. Details of the energy absorption member 20 will be described with reference to FIG. 2.

### [Lower Shell]

The lower shell 31 is a dish-shaped tray. The dish shape has a substantially Z-shaped, L-shaped, or U-shaped cross section. The lower shell 31 is manufactured from a single metal sheet (aluminum alloy or steel sheet) by press forming.

### [Upper Shell]

The upper shell 40 includes a pair of foot portions 41 extending while diverging toward the lower shell 31, a neck portion 42 located at bases of the foot portions 41, and a head portion 43 located above the neck portion 42. The upper shell 40 has an octopus shape in a cross-sectional view.

The upper shell 40 has a somewhat complex shape, but is manufactured from a single metal sheet by roll forming.

### [Neck Portion]

The neck portion 42 is a double-sheet structure in which two metal sheets are overlaid and joined by weld metal 44 formed by laser welding or the like. Due to the double-sheet structure, the neck portion 42 has sufficient strength and rigidity, thereby having the advantage that the shape thereof is less likely to be distorted between itself and the head portion 43 even when subjected to an external force.

### [Part of Vehicle Body or Attachment of Vehicle Body]

A part of the vehicle body is, for example, the side sill 11. The side sill 11 is a hollow body formed by overlaying and joining a side sill outer panel 12 and a side sill inner panel 13.

In this example, the lower shell 31, the foot portions 41 and the head portion 43 are fixed to the side sill inner panel 13 by welding via an inner plate 14 having an appropriate thickness and size.

The inner plate 14 may be omitted, and the lower shell 31, the foot portions 41, and the head portion 43 may be directly fixed to the side sill inner panel 13 by welding.

That is, at least the lower shell 31 and the head portion 43 are fixed to the vehicle body (for example, the side sill inner panel 13) directly or indirectly via the inner plate 14.

### [Closed Cross-Section Portion]

One surface of the inner plate 14 serves as a mounting surface 15 formed on a part of the vehicle body or an attachment of the vehicle body. Alternatively, the inner surface of the side sill inner panel 13 serves as the mounting surface 15 formed on a part of the vehicle body or an attachment of the vehicle body. The lower shell 31, the foot portions 41, and the head portion 43 are fixed to the mounting surface 15.

In this case, a portion surrounded by the head portion 43, the neck portion 42, the foot portions 41, and the mounting surface 15 forms a closed cross-section portion 45. The closed cross-section portion 45 has higher strength and rigidity compared to an open cross section. Due to the presence of the closed cross-section portion 45 having high strength and rigidity, the position of the neck portion 42 is maintained during the process of a collision.

### [Energy Absorption Member]

As illustrated in FIG. 2, the energy absorption member 20 is an elongated member extending along a longitudinal axis 21 of the vehicle. Preferably, the elongated member is a corrugated sheet in which peaks 22 and valleys 23 are alternately arranged along the longitudinal axis 21 of the vehicle.

The corrugated sheet has ridges orthogonal to the longitudinal axis 21 of the vehicle. In the event of a side collision such as a pole collision, the ridges are capable of buckling to absorb energy. The energy absorption member 20 is capable of absorbing a sufficiently large amount of collision energy.

### [Operation]

In FIG. 3(a), in the case of a pole collision, it is assumed that a pole 16 collides with the collision energy absorption device 10 for a vehicle as indicated by the white arrow.

As illustrated in FIG. 3(b), the ridges of the energy absorption member 20 mainly buckle and undergo plastic deformation. At this time, the lower shell 31 and the upper shell 40 stabilize the plastic deformation. As a result, the energy absorption member 20 absorbs the collision energy.

As illustrated in FIG. 3(a), since the head portion 43 is made of a relatively thin metal sheet, but has large longitudinal and lateral dimensions, the head portion 43 has high strength and rigidity as represented by the section modulus and second moment of area.

In addition, the neck portion 42 has a double-sheet structure, the neck portion 42 has a certain level of strength.

A supplemental description of the operation will be provided with reference to FIG. 4(a) to FIG. 4(c).

It is assumed that, as illustrated in FIG. 4(a), the upper shell 40 is composed of the foot portions 41 and the head portion 43 having a U shape, without the neck portion 42 being present in the upper shell 40.

In an actual collision, the white arrow is often offset vertically or is slightly inclined relative to the horizontal.

For example, due to such inclination, a force component of a collision load is applied upward (or downward) to the collision energy absorption device 10 for a vehicle.

Then, as illustrated in FIG. 4(b), the head portion 43 having a U shape is easily deformed, and as a result, the collision energy absorption device 10 for a vehicle collapses upward (or downward).

In contrast, as illustrated in FIG. 4(c), in the embodiment of the invention, the collapsing is suppressed by the supporting action of the head portion 43 and the neck portion 42, particularly by the supporting action of the neck portion 42. As a result, the collapsing is suppressed, and the ridges of the collision energy absorption device 10 for a vehicle buckle and crushes (undergo plastic deformation) over the entire length, thereby absorbing the collision energy.

That is, in FIG. 3(a), due to the presence of the head portion 43 and the neck portion 42, collapsing of the foot portions 41 and the lower shell 31 that accommodate the energy absorption member 20 is suppressed.

As a result, as illustrated in FIG. 3(b), the collision energy absorption device 10 for a vehicle does not tip vertically (even if the collision energy absorption device 10 for a vehicle tips, collapsing is sufficiently suppressed), and the energy absorption member 20 undergoes plastic deformation.

At this time, the presence of the closed cross-section portion 45 contributes to improving the rigidity of the collision energy absorption device 10 for a vehicle, and serves to promote stable plastic deformation of the collision energy absorption device 10 for a vehicle.

### [Modification Example of Energy Absorption Member]

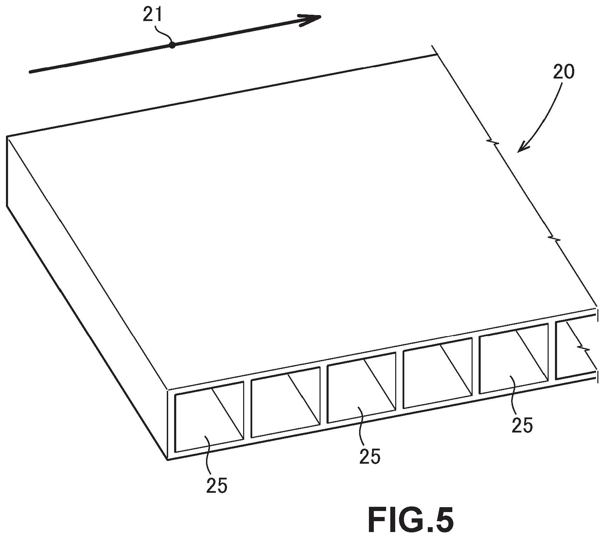

As illustrated in FIG. 5, the energy absorption member 20 may be a porous structure or a honeycomb structure in which a plurality of polygonal holes 25, each having a polygonal cross section including a rectangular cross section, are formed. In both cases, the holes form ridges at the corners.

That is, the energy absorption member 20 is an elongated member extending along the longitudinal axis 21 of the vehicle, and has the plurality of polygonal holes 25 extending in a direction orthogonal to the longitudinal axis 21 of the vehicle (vehicle width direction).

Since the energy absorption member 20 is a porous structure or a honeycomb structure, the energy absorption member 20 has sufficiently lightweight. Despite being lightweight, the energy absorption member 20 has ridges in the direction orthogonal to the longitudinal axis 21 of the vehicle (vehicle width direction), and is capable of buckling to absorb a sufficiently large amount of collision energy.

Hereinafter, modification examples of the collision energy absorption device 10 for a vehicle will be described. It should be noted that, in the following description, components common to those in FIG. 1 are denoted by the same reference numerals as those in FIG. 1, and detailed descriptions thereof will be omitted.

### [Modification Example 1 of Collision Energy Absorption Device for Vehicle]

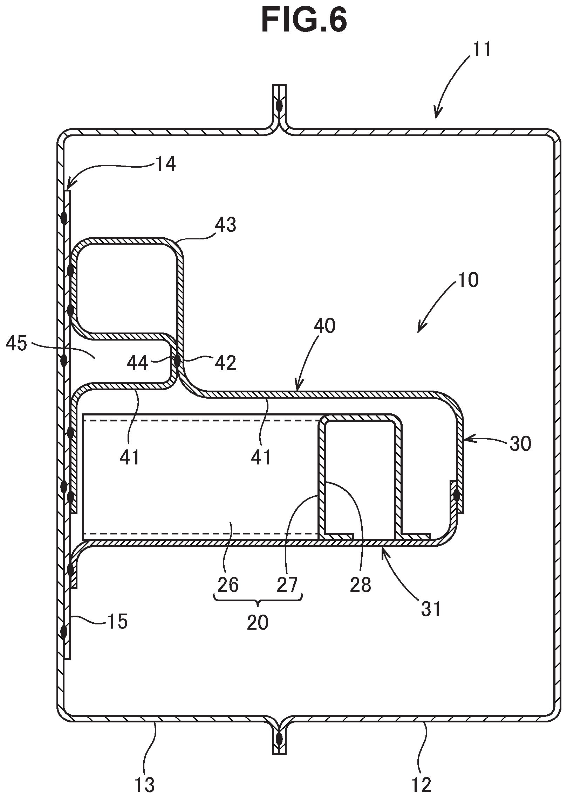

As illustrated in FIG. 6, the energy absorption member 20 includes a first energy absorption member 26 and a second energy absorption member 27 disposed to be in contact with or adjacent to the first energy absorption member 26. The second energy absorption member 27 is disposed on the input side (outside in the vehicle width direction).

The first energy absorption member 26 may be the one illustrated in FIG. 2 or FIG. 5.

### [Second Energy Absorption Member]

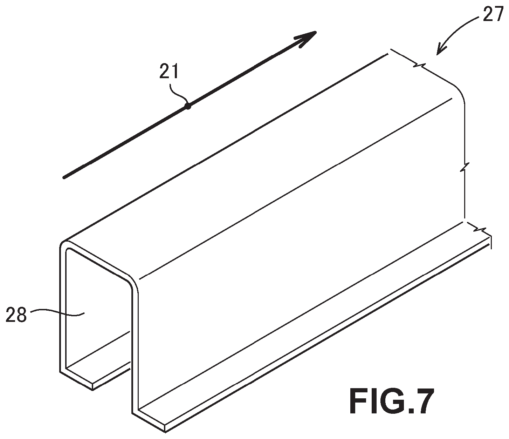

As illustrated in FIG. 7, the second energy absorption member 27 is an elongated member including a groove 28 having an open cross section (or a cavity having a closed cross section) and extending along the longitudinal axis 21 of the vehicle.

### [Operation of Modification Example 1]

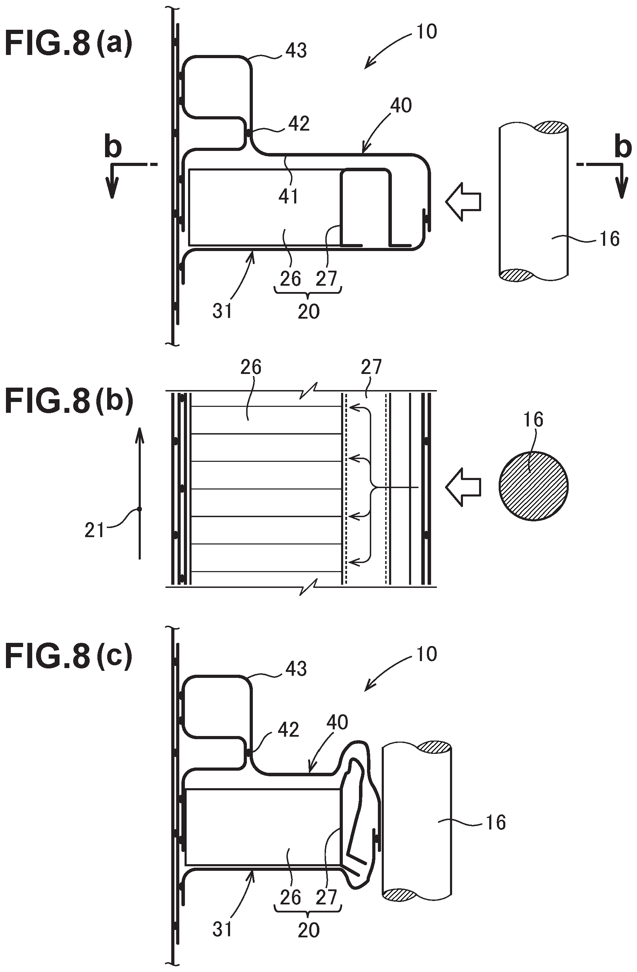

As illustrated in FIG. 8(a), the pole 16 collides with the collision energy absorption device 10 for a vehicle as indicated by the white arrow.

FIG. 8(b) is a view taken along arrow b-b in FIG. 8(a).

The pole 16 first collides with the second energy absorption member 27 at a point. The second energy absorption member 27 distributes the collision force as indicated by the tree-shaped arrows along the longitudinal axis 21 of the vehicle while undergoing bending deformation. The distributed collision force is applied to the ridges of the first energy absorption member 26.

As illustrated in FIG. 8(c), first, the second energy absorption member 27 is crushed. The first energy absorption member 26 comes into contact with the second energy absorption member 27, and the first energy absorption member 26 begins to crush.

A variety of collision modes can be addressed by providing a difference in energy absorption performance between the buckling deformation of the ridges of the first energy absorption member 26 and the bending deformation of the second energy absorption member 27.

### [Modification Example 2 of Collision Energy Absorption Device for Vehicle]

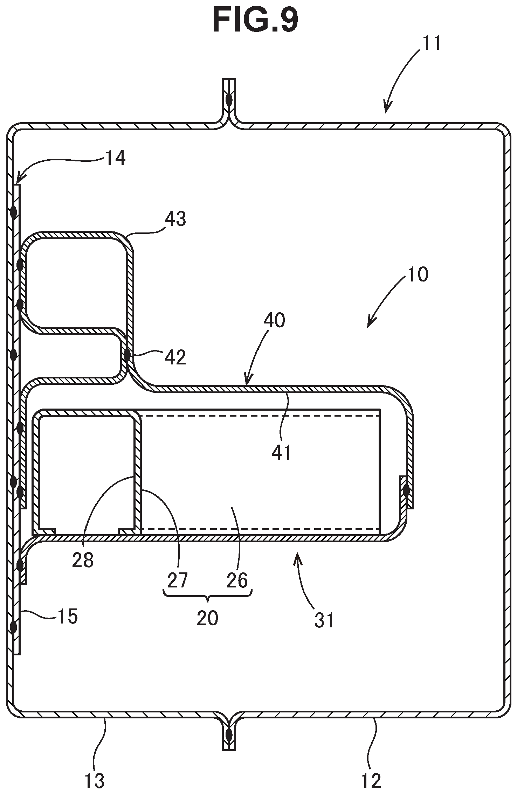

As illustrated in FIG. 9, the energy absorption member 20 includes the first energy absorption member 26 and the second energy absorption member 27 disposed to be in contact with or adjacent to the first energy absorption member 26. The second energy absorption member 27 is disposed on the non-input side (mounting surface 15 side).

The effect of distributing the collision force as described in FIG. 8(b) cannot be obtained; however, the first energy absorption member 26 can be reliably supported by the second energy absorption member 27, and buckling of the ridges of the first energy absorption member 26 can be promoted.

When the second energy absorption member 27 has the groove 28, the opening of the groove 28 is closed by the lower shell 31 (or the upper shell 40). A closed cross section is formed by closing the opening of the groove 28.

### [Modification Example 3 of Collision Energy Absorption Device for Vehicle]

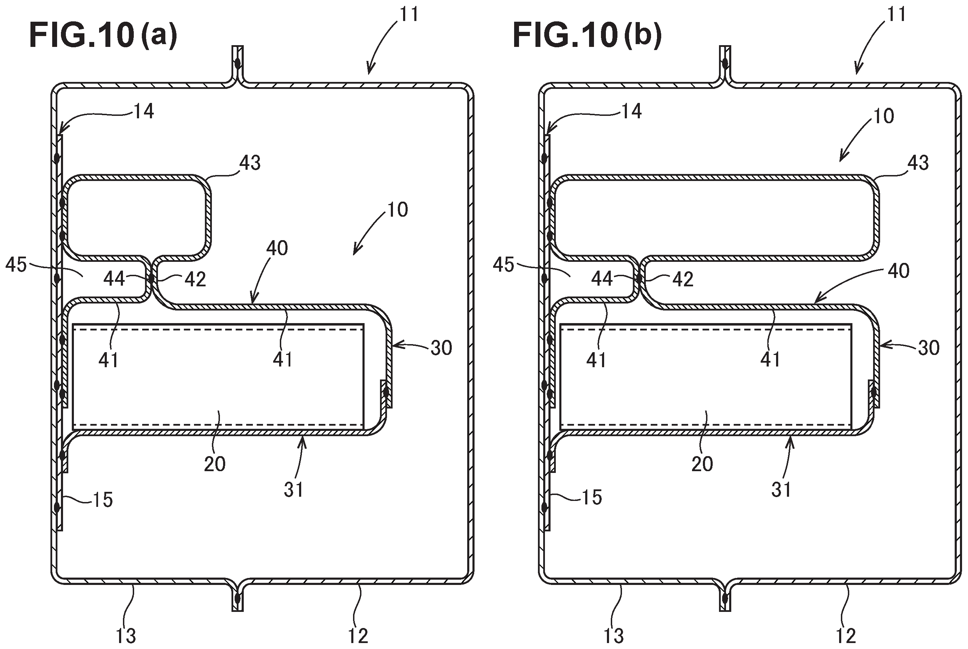

As illustrated in FIG. 10(a), the width of the head portion 43 (width in the vehicle width direction) may be increased such that the neck portion 42 is located near the center of the width of the head portion 43.

Furthermore, as illustrated in FIG. 10(b), the width of the head portion 43 may be greatly increased to be the same as the width of the lower shell 31.

The strength and rigidity of the head portion 43 can be enhanced by increasing the width of the head portion 43. Since the strength and rigidity of the head portion 43 are enhanced, the collapsing of the energy absorption member 20 can be further suppressed.

In addition, since the rigidity of the head portion 43 is enhanced, the amount of collision energy absorbed by the head portion 43 is increased, and the collision energy absorption performance of the collision energy absorption device 10 for a vehicle is enhanced.

### [Modification Example 4 of Collision Energy Absorption Device for Vehicle]

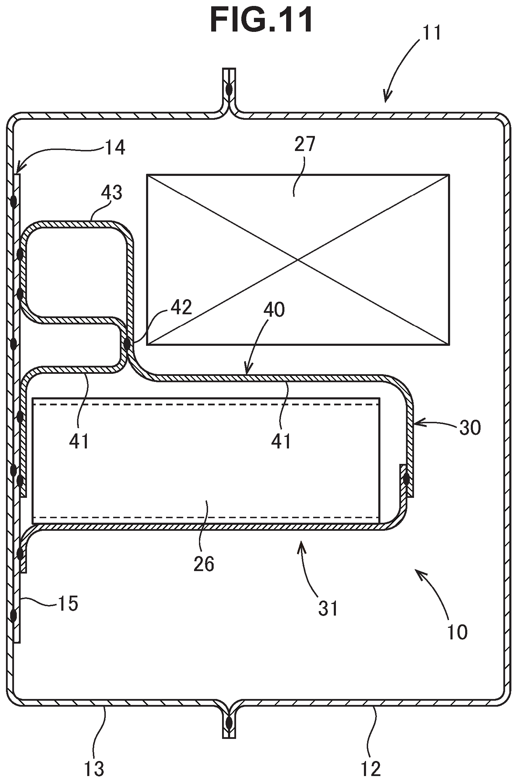

As illustrated in FIG. 11, the first energy absorption member 26 may be housed in the shell 30, and the second energy absorption member 27 may be disposed outside the shell 30 and beside the head portion 43.

In the configuration illustrated in FIG. 6, the second energy absorption member 27 crushes, and then the first energy absorption member 26 begins to crush.

In contrast, in the configuration illustrated in FIG. 11, the first energy absorption member 26 and the second energy absorption member 27 simultaneously begin to crush.

Since the energy absorption performance differs between the first energy absorption member 26 and the second energy absorption member 27, a wider variety of collision modes can be addressed.

### [Modification Example 5 of Collision Energy Absorption Device for Vehicle]

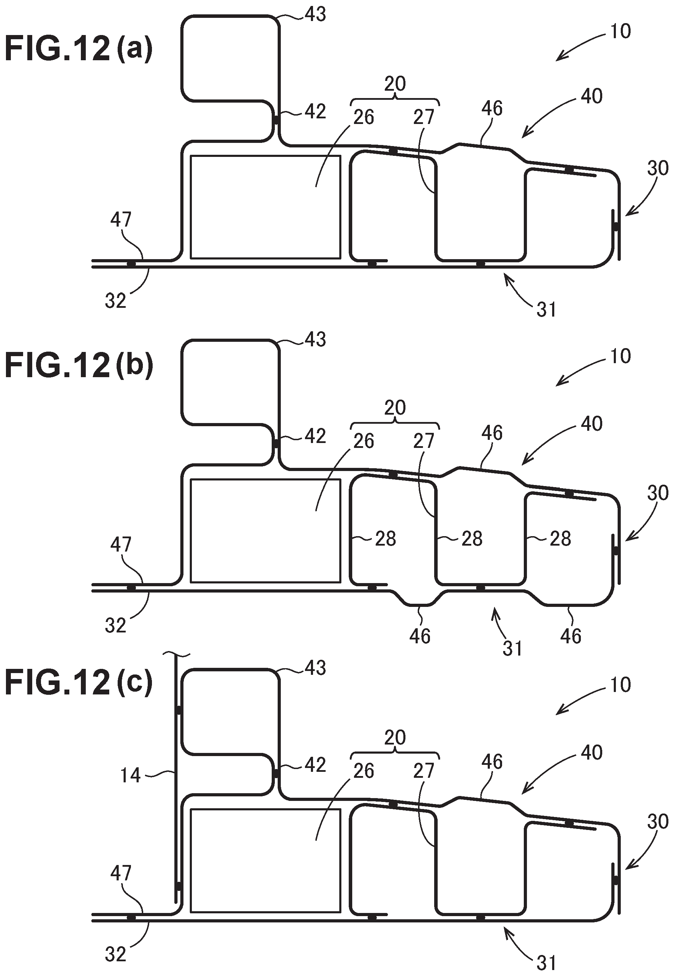

The collision energy absorption device 10 for a vehicle can be applied to a side frame of a battery case, which is an attachment of the vehicle body. In this case, as illustrated in FIG. 12(a), a protrusion 46 (or a recess) serving as a starting point for deformation may be provided at an arbitrary location on the shell 30.

In the event of a collision, the protrusion 46 preferentially begins to undergo plastic deformation. The collision mode can be controlled by providing an appropriate number of the protrusions 46 at appropriate locations.

### [Modification Example 6 of Collision Energy Absorption Device for Vehicle]

As illustrated in FIG. 12(b), the protrusion 46 (or the recess) may be provided at a portion closing the groove 28 of the second energy absorption member 27.

Since the groove 28 of the second energy absorption member 27 and a folded portion of the protrusion 46 (or the recess) serve as triggers to initiate the absorption of collision energy, the control of the collision mode can be further stabilized.

### [Modification Example 7 of Collision Energy Absorption Device for Vehicle]

As illustrated in FIG. 12(a), the lower shell 31 is provided with a projecting portion 32 extending toward the non-input side.

The upper shell 40 may be provided with a folded flange portion 47 overlapping the projecting portion 32, and the folded flange portion 47 may be joined to the projecting portion 32 of the lower shell 31.

Alternatively, as illustrated in FIG. 12(c), the lower shell 31 is provided with the projecting portion 32 extending toward the non-input side. The inner plate 14, which is a separate member and includes the folded flange portion 47 overlapping the projecting portion 32, is prepared. Then, the folded flange portion 47 may be joined to the projecting portion 32 of the lower shell 31.

The upper shell 40 is manufactured by roll forming. In the case of roll forming, even a member having a complex cross section can be manufactured.

The lower shell 31 is manufactured by press forming. In the case of press forming, a reduction in manufacturing cost can be achieved.

### [Modification Example 8 of Collision Energy Absorption Device for Vehicle]

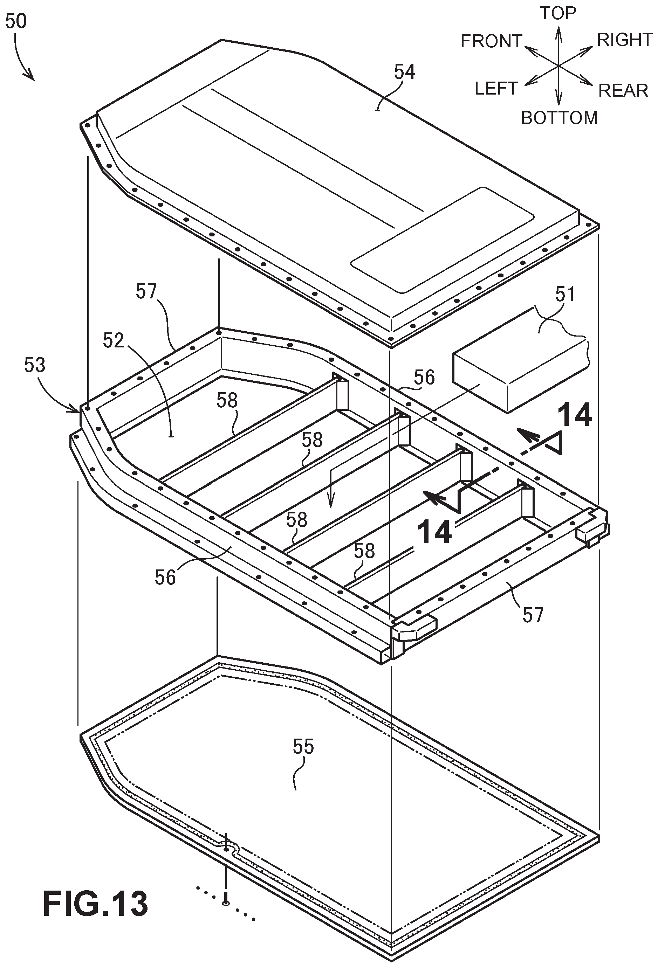

FIG. 13 illustrates a battery case 50 mounted on the vehicle body.

As illustrated in FIG. 13, the battery case 50 includes a bottom plate 52 supporting a battery 51; a frame 53 surrounding the battery 51 placed on the bottom plate 52; a lid 54 closing an upper opening of the frame 53; and a protection plate 55 protecting a cooler disposed under the bottom plate 52.

The frame 53 includes left and right side frames 56; cross members 57 extending between the side frames 56 at the front ends and the rear ends thereof; and a sub-cross member 58 spanning between the left and right side frames 56.

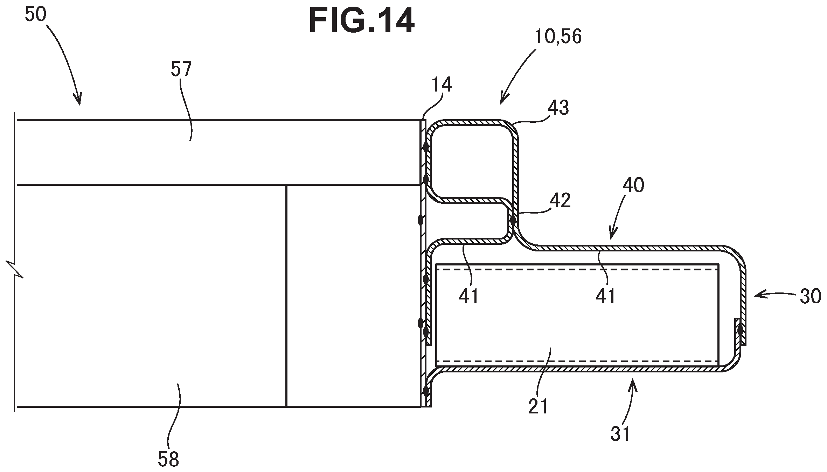

FIG. 14 is a cross-sectional view taken along line 14-14 in FIG. 13.

As illustrated in FIG. 14, each of the side frames 56 of the battery case 50 is the collision energy absorption device 10 for a vehicle of the invention. That is, the side frame 56 is also used as the collision energy absorption device 10 for a vehicle.

Compared to manufacturing the side frame 56 and the collision energy absorption device 10 for a vehicle separately, the manufacturing cost of the collision energy absorption device 10 for a vehicle can be reduced by also using the side frame 56 of the battery case 50 as the collision energy absorption device 10 for a vehicle.

### [Modification Example 9 of Collision Energy Absorption Device for Vehicle]

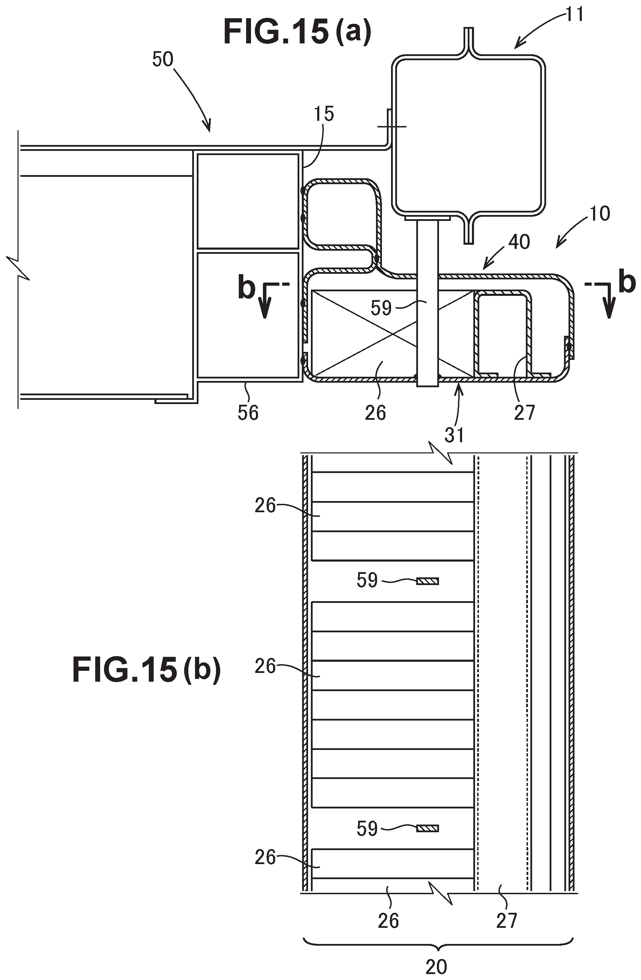

Alternatively, as illustrated in FIG. 15(a), the collision energy absorption device 10 for a vehicle may be mounted later to the side frame 56 of the battery case 50.

That is, the mounting surface 15 of the collision energy absorption device 10 for a vehicle may be a side wall of the battery case 50 or an outer surface of the side frame 56.

Since the side frame 56 is reinforced by the collision energy absorption device 10 for a vehicle, the side frame 56 can be made thinner and smaller, so that weight reduction of the battery case 50 can be achieved.

### [Modification Example 10 of Collision Energy Absorption Device for Vehicle]

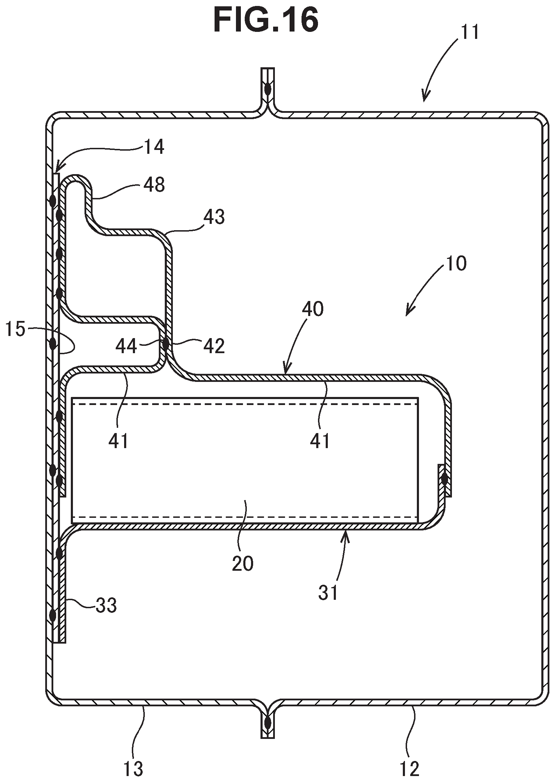

As illustrated in FIG. 16, the lower shell 31 may be provided with a lower extension portion 33 extending downward along the mounting surface 15, and the upper shell 40 may be provided with an upper extension portion 48 extending upward along the mounting surface 15.

The lower extension portion 33 and the upper extension portion 48 are joined to the mounting surface 15. Since the lower extension portion 33 and the upper extension portion 48 are vertically spaced apart from each other, the collision energy absorption device 10 for a vehicle is stably supported on the mounting surface 15. Since the collision energy absorption device 10 for a vehicle is stably supported, vertical tilting of the collision energy absorption device 10 for a vehicle in the event of a collision is effectively suppressed.

### [Modification Example 11 of Collision Energy Absorption Device for Vehicle]

In FIG. 1, the energy absorption member 20, the lower shell 31, and the upper shell 40 are preferably made of aluminum alloy sheets.

Since the aluminum alloy sheet is lightweight, weight reduction of the energy absorption member 20 can be achieved.

In addition, an improvement in the strength of the aluminum alloy sheet can be achieved by applying an appropriate heat treatment thereto. That is, the energy absorption member 20 having excellent collision energy absorption performance is provided by applying a heat treatment.

### [Modification Example 12 of Collision Energy Absorption Device for Vehicle]

As illustrated in FIG. 6, the energy absorption member 20 includes the first energy absorption member 26 and the second energy absorption member 27.

Further, the thickness of the first energy absorption member 26 is set to be greater than those of the lower shell 31 and the upper shell 40.

The energy absorption performance of the first energy absorption member 26 is enhanced by increasing the thickness. In addition to using an aluminum alloy sheet for the first energy absorption member 26, the lower shell 31 and the upper shell 40 may be made of steel sheets. Since the steel sheet has ductility, the steel sheet is capable of stabilizing the plastic deformation of the energy absorption member.

### [Modification Example 13 of Collision Energy Absorption Device for Vehicle]

In FIG. 6, the thickness of the second energy absorption member 27 is set to be less than that of the first energy absorption member 26.

When the second energy absorption member 27 is disposed on the input side, the second energy absorption member 27 is crushed, and then the first energy absorption member 26 is crushed. Since the second energy absorption member 27 is thin, the second energy absorption member 27 has low strength, and is quickly crushed. The energy absorption member 20 is sequentially crushed from the input side. As a result, stabilization of the collision mode in the energy absorption member 20 is promoted.

### [Modification Example 14 of Collision Energy Absorption Device for Vehicle]

FIG. 15(b) is a view (partially omitted) taken along arrow b-b in FIG. 15(a).

As illustrated in FIG. 15(b), the first energy absorption member 26 may be divided into a plurality of members for one second energy absorption member 27.

Gaps are created between the adjacent first energy absorption members 26 by dividing the first energy absorption member 26, and stays 59 can be disposed in the gaps.

As illustrated in FIG. 15(a), the stays 59 extend upward from the lower shell 31 while penetrating through the upper shell 40, and are fixed to, for example, the side sill 11. The side sill 11 may be replaced by a part of the vehicle body or an attachment of the vehicle body.

The collision energy absorption device 10 for a vehicle extending over a long distance along the longitudinal axis of the vehicle is mounted to the vehicle body by a plurality of the stays 59. The collision energy absorption device 10 for a vehicle is stabilized by the plurality of stays 59.

### [Method for Manufacturing Collision Energy Absorption Device for Vehicle]

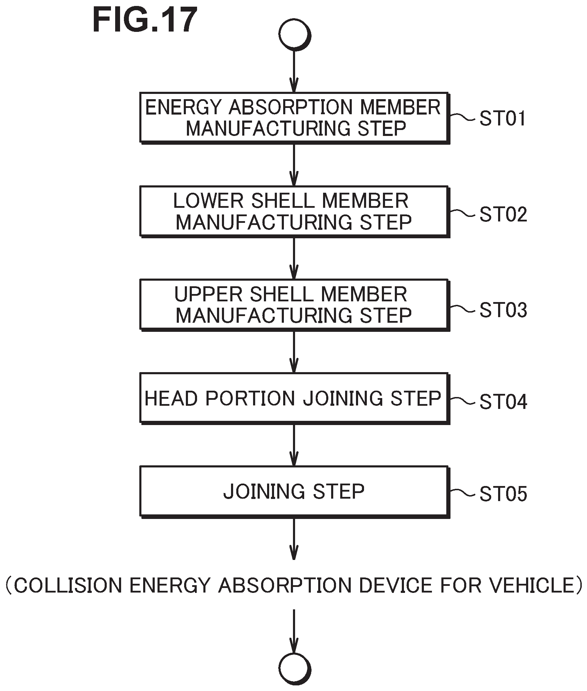

As illustrated in FIG. 17, for example, in step (hereinafter, referred to as ST) 01, an energy absorption member is manufactured; in ST02, a lower shell is manufactured, and the energy absorption member is joined to the lower shell; in ST03, an upper shell is manufactured; in ST04, a neck portion is joined; and in ST05, the upper shell is joined to the lower shell and the energy absorption member, thereby manufacturing a collision energy absorption device for a vehicle.

It should be noted that the shell is vertically divided into the lower shell and the upper shell. Therefore, the energy absorption member can be easily accommodated in the shell. The energy absorption member can be easily joined to the shell. The order of ST01 to ST03 may be changed, or ST01 to ST03 may be performed simultaneously in parallel.

### [Energy Absorption Member Manufacturing Step]

For example, the energy absorption member 20 illustrated in FIG. 2 is manufactured by bending a single aluminum alloy sheet or steel sheet.

### [Lower Shell Manufacturing Step]

The lower shell 31 having a dish shape illustrated in FIG. 1 is manufactured by press forming a single aluminum alloy sheet or steel sheet.

In the case of press forming, the lower shell 31 can be manufactured inexpensively.

### [Upper Shell Manufacturing Step]

The upper shell 40 illustrated in FIG. 1 is manufactured by roll forming a single aluminum alloy sheet or steel sheet.

A member having a single continuous and complex profile can be formed by roll forming.

### [Neck Portion Joining Step]

Double sheets constituting the neck portion 42 illustrated in FIG. 1 are joined using a laser beam. Alternatively, the double sheets are joined with an adhesive. Spot welding or riveting may be used.

### [Joining Step]

The energy absorption member 20 is set at an arbitrary position on the lower shell 31. The energy absorption member 20 and the lower shell 31 are joined by a laser beam (welding) or an adhesive.

The upper surface of the lower shell 31 is open. Therefore, spot or linear welding can be easily performed, and a sufficiently high joining strength can be obtained. In addition, since the upper surface of the lower shell 31 is open, a plurality of the energy absorption members can be easily set in the lower shell 31. In addition, since the upper surface of the lower shell 31 is open, for example, the energy absorption member 20 can be set in the lower shell 31 with a space provided on the input side.

Thereafter, the upper shell 40 is joined to the lower shell 31 to form the shell 30.

As described above, the integration of the shell 30 and the energy absorption member 20 is facilitated.

According to the method of the invention, the collision energy absorption device 10 for a vehicle can be manufactured at low cost using general-purpose techniques such as press forming, roll forming, and laser welding (or bonding).

The invention is suitable for a collision energy absorption device for a vehicle attached to a vehicle body.

### EXPLANATIONS OF LETTERS OR NUMERALS

- 10: COLLISION ENERGY ABSORPTION DEVICE FOR VEHICLE
- 14: INNER PLATE
- 15: MOUNTING SURFACE
- 20: ENERGY ABSORPTION MEMBER
- 21: LONGITUDINAL AXIS (LONGITUDINAL AXIS OF VEHICLE)
- 22: PEAK
- 23: VALLEY
- 25: POLYGONAL HOLE
- 26: FIRST ENERGY ABSORPTION MEMBER
- 27: SECOND ENERGY ABSORPTION MEMBER
- 28: GROOVE
- 30: SHELL
- 31: LOWER SHELL
- 32: PROJECTING PORTION
- 33: LOWER EXTENSION PORTION
- 40: UPPER SHELL
- 41: FOOT PORTION
- 42: NECK PORTION
- 43: HEAD PORTION
- 45: CLOSED CROSS-SECTION PORTION
- 46: PROTRUSION
- 48: UPPER EXTENSION PORTION
- 50: BATTERY CASE
- 51: BATTERY
- 52: BOTTOM PLATE
- 53: FRAME
- 56: SIDE FRAME
- 57: CROSS MEMBER
- 59: STAY

## Claims

1. A collision energy absorption device for a vehicle attached to a vehicle body to absorb collision energy when a collision force is applied to a vehicle, the collision energy absorption device for a vehicle comprising:
an energy absorption member that is an elongated member extending in a direction orthogonal to one direction and that absorbs the collision energy in the one direction; and
a shell enclosing the energy absorption member,
wherein the shell includes a lower shell covering a lower portion of the energy absorption member and an upper shell covering an upper portion of the energy absorption member,
the upper shell includes, in a cross-sectional view, a foot portion extending to the lower shell and enclosing the energy absorption member, a neck portion located at a base of the foot portion, and a head portion located above the neck portion, the neck portion having a double-sheet structure, and at least the lower shell and the head portion being located on a non-input side, and
in an event of a collision, the head portion and the neck portion having a double-sheet structure serve to suppress vertical collapsing of the energy absorption member when subjected to a load on an input side.

2. The collision energy absorption device for a vehicle according to claim 1,
wherein the head portion and the foot portion are fixed to a mounting surface formed on a part of the vehicle body or an attachment of the vehicle body, and in a cross-sectional view, a portion surrounded by the head portion, the neck portion, the foot portion, and the mounting surface is a closed cross-section portion.

3. The collision energy absorption device for a vehicle according to claim 1 or 2,
wherein the energy absorption member is an elongated member extending along a longitudinal axis of the vehicle, and is a corrugated sheet in which peaks and valleys are alternately arranged along the longitudinal axis or a porous structure having a plurality of polygonal holes extending in a vehicle width direction.

4. The collision energy absorption device for a vehicle according to claim 1 or 2,
wherein the energy absorption member includes a first energy absorption member and a second energy absorption member disposed to be adjacent to the first energy absorption member,
the first energy absorption member buckles in the one direction to absorb the collision energy, and
the second energy absorption member extends in the direction orthogonal to the one direction, and absorbs the collision energy through bending deformation.

5. The collision energy absorption device for a vehicle according to claim 1,
wherein the head portion has, in a cross-sectional view, the same width as the lower shell.

6. The collision energy absorption device for a vehicle according to claim 4,
wherein the first energy absorption member is housed in the shell, and the second energy absorption member is disposed outside the shell and beside the head portion.

7. The collision energy absorption device for a vehicle according to claim 4,
wherein a protrusion or a recess serving as a starting point for deformation is formed on the input side of the shell.

8. The collision energy absorption device for a vehicle according to claim 7,
wherein the protrusion or the recess is formed at a portion closing a groove of the second energy absorption member.

9. The collision energy absorption device for a vehicle according to claim 1,
wherein the lower shell includes a projecting portion extending toward the non-input side, and
the upper shell includes a folded flange portion overlapping the projecting portion, the folded flange portion being joined to the lower shell or being joined to the lower shell via an inner plate that is a separate member and that includes a folded flange portion overlapping the projecting portion.

10. The collision energy absorption device for a vehicle according to claim 2,
wherein the attachment is a battery case, and the vehicle body includes the battery case that houses a battery,
the battery case includes a bottom plate supporting the battery and a frame surrounding the battery placed on the bottom plate, the frame including left and right side frames and cross members extending between the side frames at front ends and rear ends of the side frames, and
each of the side frames is the collision energy absorption device for a vehicle according to claim 2.

11. The collision energy absorption device for a vehicle according to claim 2,
wherein the mounting surface is an outer surface of a battery case that houses a battery.

12. The collision energy absorption device for a vehicle according to claim 2,
wherein the lower shell includes a lower extension portion extending downward along the mounting surface, and
the upper shell includes an upper extension portion extending upward along the mounting surface.

13. The collision energy absorption device for a vehicle according to claim 1,
wherein the energy absorption member, the lower shell, and the upper shell are made of aluminum alloy sheets.

14. The collision energy absorption device for a vehicle according to claim 1,
wherein the energy absorption member includes a first energy absorption member and a second energy absorption member, and
a thickness of the first energy absorption member is greater than thicknesses of the lower shell and the upper shell.

15. The collision energy absorption device for a vehicle according to claim 14,
wherein a thickness of the second energy absorption member is less than the thickness of the first energy absorption member.

16. The collision energy absorption device for a vehicle according to claim 4,
wherein the first energy absorption member is divided into a plurality of members for one second energy absorption member, and
a stay is attached between the adjacent first energy absorption members, the stay extending upward from the lower shell while penetrating through the upper shell and being fixed directly or indirectly to the vehicle body.

17. A method for manufacturing a collision energy absorption device for a vehicle, the method comprising:
a step of manufacturing an energy absorption member;
a lower shell manufacturing step of manufacturing, by press forming, a lower shell having a dish shape and configured to house the energy absorption member;
an upper shell manufacturing step of manufacturing an upper shell by roll forming, the upper portion covering the lower shell in which the energy absorption member is housed and having a shape including, in a cross-sectional view, a foot portion extending to the lower shell, a neck portion located at a base of the foot portion, and a head portion located above the neck portion;
a neck portion joining step of joining, by a laser beam or an adhesive, double sheets constituting the neck portion; and
a step of obtaining a collision energy absorption device for a vehicle by joining the upper shell to the lower shell by a laser beam or an adhesive.

## Amended claims

### Amended claims under Art. 19.1 PCT

1. (Amended) A collision energy absorption device for a vehicle that absorbs collision energy when a collision force is applied in one direction, the collision energy absorption device for a vehicle comprising:
an energy absorption member that is an elongated member extending in a direction orthogonal to the one direction and that absorbs the collision energy in the one direction; and
a shell enclosing the energy absorption member,
wherein the shell includes a lower shell covering a lower portion of the energy absorption member and an upper shell covering an upper portion of the energy absorption member,
the energy absorption member includes a first energy absorption member and a second energy absorption member disposed to be adjacent to the first energy absorption member and on an input side of the collision force,
the first energy absorption member buckles in the one direction to absorb the collision energy,
the second energy absorption member extends in the direction orthogonal to the one direction, and absorbs the collision energy through bending deformation, and
a protrusion or a recess serving as a starting point for deformation is formed on the shell on the input side of the collision force.

2. (Amended) The collision energy absorption device for a vehicle according to claim 1,
wherein the protrusion or the recess is formed at a portion closing a groove of the second energy absorption member.

3. (Amended) The collision energy absorption device for a vehicle according to claim 1 or 2,
wherein the first energy absorption member is an elongated member extending along a longitudinal axis of a vehicle, and is a corrugated sheet in which peaks and valleys are alternately arranged along the longitudinal axis.

4. (Amended) The collision energy absorption device for a vehicle according to claim 1,
wherein the first energy absorption member, the second energy absorption member, the lower shell, and the upper shell are made of aluminum alloy sheets,
a thickness of the first energy absorption member is greater than thicknesses of the lower shell and the upper shell, and
a thickness of the second energy absorption member is less than the thickness of the first energy absorption member.

5. (Amended) The collision energy absorption device for a vehicle according to claim 1,
wherein the first energy absorption member is divided into a plurality of members for one second energy absorption member, and
a stay is attached between the adjacent first energy absorption members, the stay extending upward from the lower shell while penetrating through the upper shell and being fixed directly or indirectly to a vehicle body.

6. (Amended) A collision energy absorption device for a vehicle that absorbs collision energy when a collision force is applied in one direction, the collision energy absorption device for a vehicle comprising:
an energy absorption member that is an elongated member extending in a direction orthogonal to the one direction and that absorbs the collision energy in the one direction; and
a shell enclosing the energy absorption member,
wherein the shell includes a lower shell covering a lower portion of the energy absorption member and an upper shell covering an upper portion of the energy absorption member,
the upper shell includes, in a cross-sectional view, a foot portion extending to the lower shell and enclosing the energy absorption member, a neck portion located at a base of the foot portion, and a head portion located above the neck portion and forming a closed cross section, the neck portion having a double-sheet structure,
the neck portion and the head portion are disposed on a non-input side, and
in an initial stage of a collision, the energy absorption member, the lower shell, and the foot portion are crushed, but the neck portion and the head portion are not crushed, so that the head portion forming the closed cross section and the neck portion having a double-sheet structure serve to suppress vertical collapsing of the energy absorption member when subjected to a load on the input side.
